(19) Europäisches Patentamt
European Patent Office
Office européen des brevets

(11) **EP 3 567 397 B1**

(12) **EUROPÄISCHE PATENTSCHRIFT**

(45) Veröffentlichungstag und Bekanntmachung des Hinweises auf die Patenterteilung:
**06.07.2022 Patentblatt 2022/27**

(21) Anmeldenummer: **19172782.5**

(22) Anmeldetag: **06.05.2019**

(51) Internationale Patentklassifikation (IPC):
**G01S 7/484** (2006.01)   **G01S 7/486** (2020.01)
**G01S 7/497** (2006.01)   **G01S 17/10** (2020.01)

(52) Gemeinsame Patentklassifikation (CPC):
**G01S 7/4865; G01S 7/484; G01S 7/4868;
G01S 7/497; G01S 17/10**

(54) **VERFAHREN UND OPTOELEKTRONISCHER SENSOR ZUM MESSEN EINER ENTFERNUNG VON OBJEKTEN**

METHOD AND OPTOELECTRONIC SENSOR FOR MEASURING THE DISTANCE OF OBJECTS

PROCÉDÉ ET CAPTEUR OPTOÉLECTRONIQUE PERMETTANT DE MESURER L'ÉLOIGNEMENT D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2018 DE 102018111217**

(43) Veröffentlichungstag der Anmeldung:
**13.11.2019 Patentblatt 2019/46**

(73) Patentinhaber: **Pepperl+Fuchs SE
68307 Mannheim (DE)**

(72) Erfinder: **KLEMT, Hans-Jürgen
12277 Berlin (DE)**

(74) Vertreter: **Schiffer, Axel Martin
Rundfunkplatz 2
80335 München (DE)**

(56) Entgegenhaltungen:
**WO-A1-2009/156580      WO-A1-2010/051615
JP-A- H08 105 971**

• **G. ZHOU ET AL: "IMPROVEMENT ON TIMING ACCURACY OF LIDAR FOR REMOTE SENSING", ISPRS - INTERNATIONAL ARCHIVES OF THE PHOTOGRAMMETRY, REMOTE SENSING AND SPATIAL INFORMATION SCIENCES, Bd. XLII-3, 2. Mai 2018 (2018-05-02), Seiten 2495-2498, XP055624496, DOI: 10.5194/isprs-archives-XLII-3-2495-2018**

**Beschreibung**

Die vorliegende Erfindung betrifft in einem ersten Gesichtspunkt ein Verfahren zum Messen einer Entfernung von Objekten. In einem zweiten Gesichtspunkt bezieht sich die Erfindung auf einen optoelektronischen Sensor zum Messen einer Entfernung von Objekten.

Bei einem gattungsgemäßen Verfahren werden folgende Verfahrensschritte durchgeführt: eine Sendeeinheit sendet Lichtpulse aus, eine Empfangseinheit detektiert von einem zu vermessenden Objekt zurückgestrahlte Lichtpulse und aus einer Zeitdifferenz zwischen einem Empfangszeitpunkt eines Lichtpulses und einem Aussendezeitpunkt dieses Lichtpulses wird eine Entfernung des Objekts bestimmt.

Ein gattungsgemäßer optoelektronischer Sensor zum Messen einer Entfernung von Objekten weist folgende Komponenten auf: eine Sendeeinheit zum Aussenden von Lichtpulsen in einen Erfassungsbereich, eine Empfangseinheit zum Detektieren von Lichtpulsen, die von einem zu vermessenden Objekt im Erfassungsbereich zurückgestrahlt werden, und eine Steuer- und Auswerteeinheit zum Ansteuern der Sendeeinheit und zum Auswerten der von der Empfangseinheit detektierten Lichtpulse. Die Steuer- und Auswerteeinheit ist dabei dazu eingerichtet, aus einer Zeitdifferenz zwischen einem Empfangszeitpunkt eines Lichtpulses und einem Aussendezeitpunkt dieses Lichtpulses eine Entfernung des zu vermessenden Objekts zu bestimmen.

Ein gattungsgemäßes Verfahren und ein gattungsgemäßer optoelektronischer Sensor sind beispielsweise in EP 0 782 007 A2 beschrieben.

Optoelektronische Sensoren zur berührungslosen Distanzmessung werden je nach genutztem Verfahren in verschiedene Kategorien eingeteilt.

Eine erste Möglichkeit, Entfernungen sehr präzise zu messen, besteht darin, die Phasenlage von ausgesandter und empfangener Welle zu messen. Bei diesem Verfahren werden von einer Laserdiode Sinuswellen ausgesendet. Durch den Vergleich der Phasenlage der ausgesendeten Welle mit der Phasenlage der empfangenen Welle kann die Entfernung bestimmt werden.

Im Unterschied dazu werden bei Pulslaufzeitverfahren von einer Lichtquelle kurze Pulse ausgesendet. Durch die Messung der Laufzeit zwischen dem Aussenden des Pulses und dem Nachweis des reflektierten Lichts kann die Entfernung des reflektierenden Objekts bestimmt werden. Auf dieses Verfahren und die dazugehörige Vorrichtung bezieht sich die vorliegende Erfindung.

Die Genauigkeit der Entfernungsmessung hängt entscheidend davon ab, wie genau der Empfangszeitpunkt des Echopulses bestimmt werden kann. Als Echopuls wird hierbei ein Lichtpuls bezeichnet, der von einem zu vermessenden Objekt im Erfassungsbereich zurückgestrahlt und in der Empfangseinheit nachgewiesen wird. Herkömmliche Pulsverfahren senden einen Einzelpuls und bestimmen die Lage des daraufhin empfangenen Echopulses. Dabei wird der Echopuls durch eine Komparatorschwelle von Störsignalen unterschieden. Das funktioniert nur dann zuverlässig, wenn die Störsignale unterscheidbar kleiner sind als die kleinsten aufzulösenden Echopulse.

Problematisch ist das Auftreten von Objekten mit stark unterschiedlichen Reflektivitäten, die entsprechend stark variierende Amplituden der Echopulse auf der Empfangseinheit zur Folge haben. Auch die Anstiegsgeschwindigkeiten des Echosignals sind für unterschiedliche Amplituden des Echosignals unterschiedlich. Ein nahes Objekt hoher Reflektivität, wie z.B. ein Tripelreflektor, der auch als kooperatives Ziel bezeichnet wird, einerseits und ein fernes Objekt geringer Reflektivität andererseits unterscheiden sich in der Praxis hinsichtlich der von den Objekten remittierten Intensität und damit der Echosignalamplitude um Größenordnungen bis zu einem Faktor 1 Million oder mehr. Eine Empfangseinheit, die diesen Dynamikbereich abdecken soll, wird bei hohen Echoamplituden zwangsläufig übersteuern.

Die Bestimmung des Empfangszeitpunktes mittels einer Komparatorschwelle ist somit abhängig von der Anstiegsgeschwindigkeit und der Signalamplitude des Echosignals, wie z. B. in EP 0 782 007 A2, Figur 1 gezeigt.

Figur 2 von EP 0 782 007 A2 zeigt, dass durch die Messung mittels zweier Schwellen an der ansteigenden Flanke die Anstiegsgeschwindigkeit des Empfangssignals bestimmt werden kann und eine genauere Laufzeitmessung möglich wird. EP 0 782 007 A2 beschreibt eine Methode und ein Verfahren zur Laufzeitmessung mittels Messung des Zeitintervalls zwischen dem Überschreiten der Schwelle (ansteigende Flanke des Empfangssignals) und dem Unterschreiten der Schwelle bei der fallenden Flanke. Anhand des gemessenen Zeitintervalls wird eine Korrektur bestimmt. Nachteilig ist dabei, dass mehrere Zeitmessungen kurz aufeinanderfolgend mit sehr hoher Genauigkeit im Pikosekunden-Bereich und unterschiedlichen Schwellen durchgeführt werden müssen. Die Bestimmung des Zeitintervalls zwischen Über- und Unterschreiten der Schwelle an der ansteigenden bzw. fallenden Flanke des Echosignals funktioniert nicht bei Übersteuerung des Empfängers.

Die Reflektivität eines nachzuweisenden Objekts kann die gemessene Laufzeit also in der Weise verändern, dass ein stark reflektierendes Objekt zu einem früheren Auslösen und ein schwach reflektierendes Objekt zu einem späteren Auslösen des Empfängers führt. Dieser sogenannte Amplitudenfehler kann durch Erfassen der Pulsenergie beziehungsweise der Pulsbreite errechnet und von der gemessenen Laufzeit subtrahiert werden. Dieses Verfahren ist unter dem Begriff der Amplitudenkompensation bekannt.

Bei einem alternativen Ansatz wird mit einem optischen Helligkeitsregler, beispielsweise einem Blendenrad, die Amplitude der Empfangspulse konstant gehalten. Das ist aber aufwändig und auch im Hinblick auf die Regelgeschwindigkeit beschränkt.

Ein wesentliches Problem der oben beschriebenen herkömmlichen Amplitudenkompensation ist also zunächst, dass der Dynamikbereich der verfügbaren Empfänger nicht ausreichend ist. In diesem Zusammenhang spielt eine Rolle, dass die Pulsbreite bei übersteuerten Empfängern instabil und insbesondere temperaturabhängig ist. Von Bedeutung ist auch, dass die Pulsbreite im übersteuerten Empfänger nicht stetig mit dem Empfangspegel ansteigt. Eine eindeutige Zuordnung zwischen Pulsbreite und Messfehler ist deshalb jedenfalls nicht mit der gewünschten Genauigkeit möglich.

Weiterhin können Mehrfachreflexionen zwischen dem Sensor und einem Objekt bei bestimmten Kombinationen von Entfernungen des Objekts und Pulsbreiten einer exakten Bestimmung der Pulsbreiten entgegenstehen.

Ungünstig ist schließlich auch, dass die fallenden Flanken der Empfangssignale in der Regel deutlich stärker verrauscht sind als die ansteigenden Flanken. Die Pulsbreite und somit auch die Korrekturwerte weisen deshalb ein vergleichsweise hohes Rauschen auf und Korrekturen mit diesen verrauschten Werten führen zu entsprechend verrauschten Messwerten.

WO 2009/156580 A1 beschreibt ein Laufzeitverfahren, bei dem Empfangspulse mit einer Mehrzahl von Schwellen abgetastet werden.

WO 201 0/051 61 5 A1 offenbart ein Laufzeitverfahren, bei dem die abfallende Flanke der Empfangspulse abgetastet werden.

G. ZHOU ET AL: "IMPROVEMENT ON TIMING ACCURACY OF LIDAR FOR REMOTE SENSING", ISPRS - INTERNATIONAL ARCHIVES OF THE PHOTOGRAMMETRY, REMOTE SENSING AND SPATIAL INFORMATION SCIENCES, Bd. XLII-3, 2. Mai 2018 (2018-05-02), Seiten 2495-2498, XP055624496, DOI: 10.5194/isprs-archives-XLII-3-2495-2018, befasst sich auch mit der Auswertung der ansteigenden Flanke der Empfangspulse. Dabei werden die Pulse jeweils mit unterschiedlichen Verstärkungen verstärkt und für die so erhaltenen verstärkten Empfangspulse werden Korrekturverfahren beschrieben.

JP H08 105971 A ist ein Laufzeitverfahren beschrieben, bei dem Sendepulse mit unterschiedlicher Energie aussendet werden und ein Korrekturwert für den Empfangszeitpunkt aus dem Amplitudenverhältnis der unterschiedlichen Pulse gewonnen wird.Als eine Aufgabe der vorliegenden Erfindung kann angesehen werden, ein Verfahren zur Bestimmung der Entfernung von Objekten und einen optoelektronischen Sensor hierzu anzugeben, bei dem eine besonders hohe Genauigkeit erreicht werden kann.

Diese Aufgabe wird im Hinblick auf das Verfahren durch das Verfahren mit den Merkmalen 1 gelöst. Bezüglich der Vorrichtung wird das Verfahren durch den optoelektronischen Sensor mit den Merkmalen des Anspruchs 9 gelöst.

Das Verfahren der oben angegebenen Art ist erfindungsgemäß dadurch weitergebildet, dass Lichtpulse mit mindestens zwei verschiedenen Pulsenergien ausgesendet werden und dass abhängig von Differenzen der für die verschiedenen Pulsenergien gemessenen Empfangszeitpunkte die Empfangszeitpunkte mit einem Korrekturwert korrigiert werden.

Der optoelektronische Sensor der oben angegebenen Art ist erfindungsgemäß dadurch weitergebildet, dass die Steuer- und Auswerteeinheit dazu eingerichtet ist, die Sendeeinheit zum Aussenden von Lichtpulsen mit mindestens zwei verschiedenen Pulsenergien anzusteuern und abhängig von einer Differenz der für die verschiedenen Pulsenergien gemessenen Empfangszeitpunkte der empfangenen Lichtpulse den Empfangszeitpunkt mit einem Korrekturwert zu korrigieren.

Bei dem erfindungsgemäßen optoelektronischen Sensor ist bevorzugt die Steuer- und Auswerteeinheit dazu eingerichtet, das Verfahren mit dem optoelektronischen Sensor durchzuführen.

Vorteilhafte Varianten des erfindungsgemäßen Verfahrens und bevorzugte Ausgestaltungen werden im Folgenden, insbesondere im Zusammenhang mit den abhängigen Ansprüchen und den beigefügten Figuren, erläutert.

Als ein wesentlicher Grundgedanke der Erfindung kann angesehen werden, anstelle von Lichtpulsen mit nur einer Pulshöhe oder Pulsenergie, Lichtpulse mit mindestens zwei verschiedenen Pulsenergien zu verwenden. Diesem Grundgedanken liegt die Erkenntnis zugrunde, dass beim Messen mit Lichtpulsen mit mindestens zwei verschiedenen Pulsenergien, selbst wenn nur die ansteigende Flanke der Pulse für die Messung verwendet wird, zusätzliche Information über die Steilheit der Flanke erhalten werden kann.

Mit dem erfindungsgemäßen Verfahren können Ungenauigkeiten, die aus der Amplitude eines empfangenen Lichtpulses resultieren, mit besonders guter Genauigkeit korrigiert werden und insgesamt kann dadurch die Genauigkeit der Entfernungsmessung durch Laufzeitmessung deutlich gesteigert werden.

Das Messen des Empfangszeitpunkts von empfangenen Lichtpulsen mit mindestens zwei verschiedenen Pulsenergien unter Verwendung einer Komparatorschwelle ist im Prinzip äquivalent zu einem Vermessen der ansteigenden Flanke der empfangenen Lichtpulse mit einer einzigen Pulsenergie und Verwendung von zwei verschiedenen Komparatorschwellen. Die erfindungsgemäße Verwendung von Lichtpulsen mit mindestens zwei verschiedenen Pulsenergien hat aber den Vorteil, dass die Verhältnisse der Pulsenergien deutlich größer gewählt werden können, als die Verhältnisse von zwei verschiedenen Komparatorschwellen. Das bedeutet im Ergebnis, dass die Anstiegszeit des empfangenen Lichtpulses deutlich genauer aufgelöst und in einem höheren Dynamikbereich erfasst werden kann.

Wesentliche Vorteile der Erfindung ergeben sich aus dem Umstand, dass ausschließlich die steigende Flanke der empfangenen Lichtpulse zur Bestimmung der Laufzeit und der Korrekturwerte herangezogen wird.

Die Messung der Empfangszeitpunkte von Lichtpulsen mit unterschiedlicher Pulshöhe liefert im Prinzip eine Information über die Anstiegszeit und damit auch über die Pulshöhen oder Pulsenergien der verwendeten Lichtpulse. Für die hier angestellten Betrachtungen hängen die Größen Anstiegszeit, Pulshöhe und Pulsenergie funktional monoton miteinander zusammen. Wenn daher von einer Messung der Anstiegszeit gesprochen wird, ist damit vom Prinzip auch eine Messung der Pulshöhe und der Pulsenergie mit umfasst und gemeint.

Da ausschließlich die ansteigende Flanke, also die qualitativ gut definierte Flanke der empfangenen Lichtpulse, zur Ermittlung der Laufzeit und der Pulsenergien herangezogen wird, liefert das erfindungsgemäße Verfahren sehr hochwertige Messdaten. Die gemessenen Pulsenergien und die auf dieser Grundlage ermittelten Korrekturwerte weisen eine sehr geringe Temperaturabhängigkeit auf, weil sich die temperaturbedingten Einflussgrö-βen, insbesondere durch die Subtraktion von Rohmesswerten, eliminieren lassen. Das erfindungsgemäße Verfahren ist deshalb auch für einfache Empfänger mit geringer Bandbreite gut geeignet.

Die Differenz der für Lichtpulse mit unterschiedlicher Pulsenergie gemessenen Empfangszeitpunkte wird für die Zwecke der vorliegenden Beschreibung auch als Delta-Amplitude bezeichnet.

Empfänger mit geringer Bandbreite profitieren von einer höheren Auflösung der Delta-Amplitude. Die gemessene Delta-Amplitude wird deutlich weniger durch eine Dämpfung im Signalweg, beispielsweise durch eine verschmutzte Frontscheibe des optoelektronischen Sensors, beeinflusst.

Die Anforderungen an den Empfänger sind auch deshalb deutlich geringer als bei Verfahren, welche eine herkömmliche Amplitudenkompensation nutzen, weil das Verhalten des Empfängers mit zunehmender Übersteuerung praktisch irrelevant ist. Grund hierfür ist, dass sich ein möglicherweise schlecht definierter und insbesondere nichtstetiger Zusammenhang zwischen Pulsenergie und Pulsbreite nicht mehr auf die Messgenauigkeit auswirkt. Für das Design des Empfängers ist es demgemäß ausreichend, sich ausschließlich auf die Optimierung der steigenden Flanke zu konzentrieren.

Die Pulsenergie wird bei dem erfindungsgemäßen Verfahren im Prinzip mit derselben Messgenauigkeit erfasst, wie die Signallaufzeit selbst. Der Messwert wird nicht durch einen unzureichenden Korrekturwert verschlechtert. Weil außerdem Reflexionen zeitlich gesehen frühestens nach dem ersten Eintreffen des Lichts am elektrooptischen Sensor auftreten können, können auch Mehrfachreflexionen keine nachteilige Rolle mehr spielen. Das erfindungsgemäße Verfahren ist deshalb absolut immun gegen Mehrfachreflexionen.

Das erfindungsgemäße Verfahren hat außerdem den Vorteil, dass sich das hier vorgeschlagene Kompensationsverfahren nicht wie die auf einer Pulsweitenmessung beruhende herkömmliche Amplitudenkompensation an dem Signalpegel zur Kompensation des Entfernungsfehlers orientiert, sondern an einem Laufzeitfehler selbst. Das führt dazu, dass die Differenzen der Empfangszeitpunkte für empfangene Lichtpulse mit unterschiedlichen Pulsenergien bei schwachen Signalpegeln besonders groß sind. Der dadurch verursachte Entfernungsfehler hingegen ist vergleichsweise klein.

Von Bedeutung ist außerdem, dass der Verlauf der Delta-Amplitude für schwache Signalpegel vergleichsweise flach ist, sodass bei Korrektur von schwachen Signalen die Messunsicherheit dieser Korrektur ebenfalls relativ gering ist. Auch in diesem Zusammenhang werden im Vergleich zur vergleichsweise deutlich steileren Kennlinie der Pulsweiten-Amplitudenkompensation deutliche Verbesserungen erreicht.

Grundsätzlich kann ein Korrekturwert mit Hilfe einer Korrekturfunktion oder -tabelle in Abhängigkeit der Amplitude des Echosignals, also der Amplitude oder Energie eines empfangenen Lichtpulses, bestimmt werden.

Grundsätzlich können die Empfangszeitpunkte für die stärkeren Lichtpulse oder die Empfangszeitpunkte für die schwächeren Lichtpulse als Ausgangspunkt für die Korrektur dienen.

Prinzipiell kommt es für die Verwirklichung des erfindungsgemäßen Verfahrens darauf an, dass einem empfangenen Lichtpuls in einer definierten Weise ein Empfangszeitpunkt zugeordnet wird. Erfindungsgemäß wird als Empfangszeitpunkt derjenige Zeitpunkt gewertet, zu dem eine ansteigende Flanke eines detektierten Lichtpulses eine Schwelle durchstößt.

Die Korrektur der gemessenen Empfangszeitpunkte kann prinzipiell durch eine Multiplikation mit einem Korrekturfaktor erfolgen. Erfindungsgemäß wird der Empfangszeitpunkt mit einem zu subtrahierenden Korrekturwert korrigiert wird. Ein solcher Korrekturwert wird als additiver Korrekturwert bezeichnet. Damit sind auch negative also zu subtrahierende Werte gemeint. Prinzipiell kann dabei, für den Fall, dass Lichtpulse mit zwei verschiedenen Pulsenergien verwendet werden, sowohl der Empfangszeitpunkt der schwächeren Lichtpulse oder der Empfangszeitpunkt der stärkeren Lichtpulse als Ausgangspunkt für die Korrektur verwendet werden.

Kombinationen einer Multiplikation mit einem Korrekturfaktor und einem additiven Korrekturwert sind ebenfalls möglich.

Erfindungsgemäß wird Differenzen der für zwei verschiedene Pulsenergien gemessenen Empfangszeitpunkte ein von einem der Empfangszeitpunkte zu subtrahierender Korrekturwert zugeordnet. Im Hinblick auf den prinzipiell zu definierenden Nullpunkt der Entfernungsmessung relativ zum optoelektronischen Sensor sind die Korrekturwerte nur bis auf eine grundsätzlich frei wählbare additive Konstante festgelegt.

Für verschiedene Differenzen der für die verschiedenen Pulsenergien gemessenen Empfangszeitpunkte werden die Korrekturwerte erfindungsgemäß durch Kalibrierungsmessungen gewonnen. Solche Messungen können beispielsweise werkseitig vor der Auslieferung eines erfindungsgemäßen optoelektronischen Sensors an einen Kunden, gegebenenfalls aber auch im laufenden Messbetrieb durchgeführt werden.

Insbesondere können Kalibrierkurven ermittelt werden, die jedem Paar von Empfangszeitpunkten, die für ein bestimmtes Paar von gesendeten Lichtpulsen mit unterschiedlicher Pulsenergie gewonnen werden, einen Korrekturwert zuordnen.

Für die Verwirklichung des erfindungsgemäßen Verfahrens ist es ausreichend, wenn Lichtpulse mit zwei verschiedene Pulsenergien verwendet werden. Die Informationsbasis zur Ermittlung von geeigneten Korrekturwerten kann gesteigert werden bei Varianten des erfindungsgemäßen Verfahrens, bei denen Kalibrierkurven ermittelt werden für unterschiedliche Abstände der Pulsenergien der gesendeten Lichtpulse.

Eine weitere vorteilhafte Variante des erfindungsgemäßen Verfahrens ist dadurch gekennzeichnet, dass vor einer Messung unterschiedliche Pulsenergien der gesendeten Lichtpulse und unterschiedliche Abstände der Pulsenergien der gesendeten Lichtpulse für ein zu vermessendes Objekt getestet werden und dass die Messung mit einer Pulsenergie der gesendeten Lichtpulse und einem Abstand der Pulsenergien durchgeführt wird, bei denen gemäß den Kalibrierkurven eine möglichst geringe Messunsicherheit erreicht wird.

Grundsätzlich kann auch von Vorteil sein, wenn auch die Messungen selbst mit mehreren verschiedenen Paaren von verschiedenen Pulsenergien der gesendeten Lichtpulse durchgeführt werden.

Wenngleich, wie oben erläutert, die erfindungsgemäße Verwendung von Lichtpulsen mit unterschiedlicher Pulsenergien Vorteile aufweist im Vergleich zu Messungen mit verschiedenen Schwellen, hat die Messung mit verschiedenen Schwellen jedenfalls den Vorteil, dass die Messwerte simultan generiert werden und die Messung als solche deshalb schneller ist. Diesen Vorteil kann man sich zu Nutze machen bei Varianten des erfindungsgemäßen Verfahrens, bei denen die detektierten Lichtpulse mit mehr als einer Schwelle verglichen werden.

Besonders bevorzugt wird eine Folge von Lichtpulsen ausgesendet, die abwechselnd aus Lichtpulsen mit niedriger und hoher Sendeamplitude besteht. Für jeweils zwei aufeinanderfolgende Einzelmessungen kann eine Korrektur anhand der Zeitdifferenz durchgeführt werden. Mit n Einzelmessungen enthält man n-1 korrigierte Messungen.

Grundsätzlich ist aber auch möglich, dass die Pulsenergien der gesendeten Lichtpulse in einem Messzyklus variiert werden und insbesondere in einer Rampe hochgefahren werden, gemäß einer Dreiecksfunktion und/oder gemäß einer Sägezahnfunktion variiert werden. Hierdurch kann die ansteigende Flanke der empfangenen Lichtpulse noch genauer vermessen und die gemessenen Entfernungswerte können noch genauer korrigiert werden.

Weitere Vorteile und Merkmale der Erfindung werden im Folgenden mit Bezug auf die beigefügten schematischen Figuren erläutert. Hierin zeigen:

Figur 1: eine schematische Ansicht eines gattungsgemäßen optoelektronischen Sensors;

Figur 2: ein schematisches Diagramm zur Erläuterung des gattungsgemäßen Messprinzips;

Figur 3: ein schematisches Diagramm zur Erläuterung des erfindungsgemäßen Messprinzips;

Figur 4: ein weiteres schematisches Diagramm zur Erläuterung des erfindungsgemäßen Messprinzips;

Figur 5 eine schematische Ansicht zur Erläuterung eines erfindungsgemäßen optoelektronischen Sensors;

Figur 6: ein Diagramm mit experimentell bestimmten Kalibrierkurven für einen erfindungsgemäßen optoelektronischen Sensor; und

Figur 7: ein Diagramm mit einer experimentell bestimmten Kalibrierkurve aus dem Stand der Technik.

Gleiche und gleichwirkende technische Komponenten sind in den Figuren in der Regel jeweils mit denselben Bezugszeichen versehen.

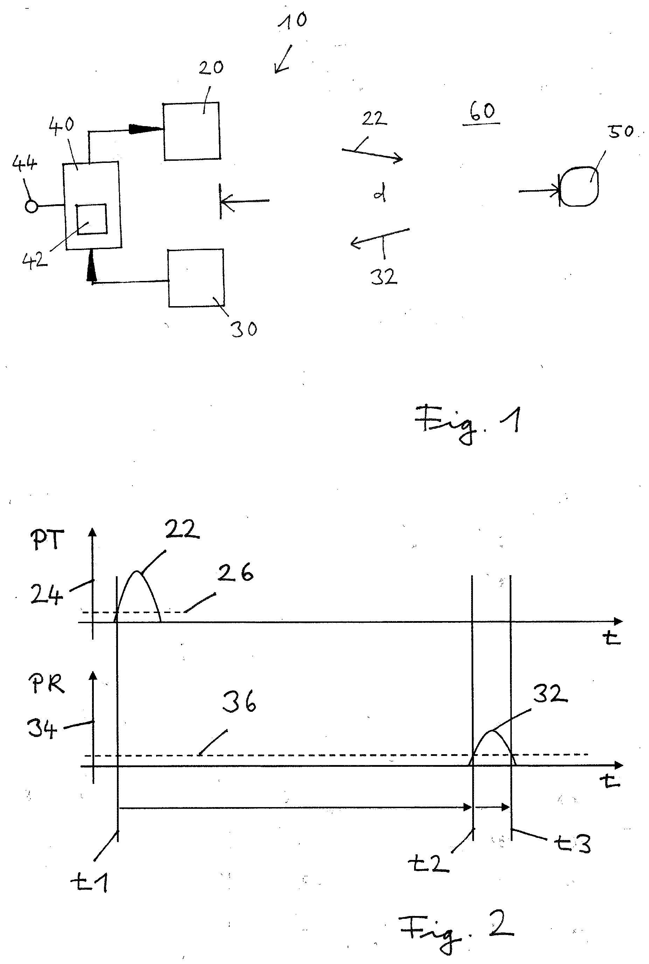

Der in Figur 1 dargestellte gattungsgemäße optoelektronische Sensor 10 zum Messen einer Entfernung d von Objekten 50 weist als wesentliche Komponenten eine Sendeeinheit 20 zum Aussenden von Lichtpulsen 22 in einen Erfassungsbereich 60, eine Empfangseinheit 30 zum Detektieren von Lichtpulsen 32, die von einem zu vermessenden Objekt 50 im Erfassungsbereich 60 zurückgestrahlt werden, und eine Steuer- und Auswerteeinheit 40 auf.

Die Steuer- und Auswerteeinheit 40 dient zum Ansteuern der Sendeeinheit 20 und zum Auswerten der von der Empfangseinheit 30 detektierten zurückgestrahlten Lichtpulse 32 und ist außerdem dazu eingerichtet, aus einer Zeitdifferenz zwischen einem Empfangszeitpunkt t2 eines von dem Objekt 50 zurückgestrahlten Lichtpulses 32 und einem Aussendezeitpunkt t1 dieses Lichtpulses 22 eine Entfernung d des zu vermessenden Objekts 50 zu bestimmen.

Dieses grundlegende Messprinzip wird im Zusammenhang mit Figur 2 näher beschrieben.

In dem in Figur 2 oben gezeigten Diagramm ist die Sendeleistung PT (vertikale Achse 24) einer Lichtquelle der Sendeeinheit 20, typischerweise eine Laserdiode, gegen die Zeit t aufgetragen. Das in Figur 2 unten dargestellte Diagramm zeigt die in der Empfangseinheit 30 von einem Empfänger, typischerweise eine Fotodiode, gemessene Empfangsleistung PR (vertikale Achse 34) in Abhängigkeit der Zeit t.

Für die grundlegende Messaufgabe, die Laufzeit eines Lichtpulses zu bestimmen, müssen im Grundsatz zwei Zeitpunkte gemessen werden, nämlich der Startzeitpunkt und der Empfangszeitpunkt.

Eine Messung beginnt mit dem Aussenden eines Lichtpulses 22, der in Figur 2 durch einen pulsartigen Verlauf der Sendeleistung PT wiedergegeben ist. Als Startpunkt der Zeitmessung wird in dem gezeigten Beispiel derjenige Zeitpunkt t1 auf der ansteigenden Flanke des Pulses 22 gewählt, zu dem die Flanke eine gewählte Schwelle 26 durchstößt. Elektronisch kann das beispielsweise realisiert werden, indem ein Strom, mit welchem eine Laserdiode angesteuert wird, abgefragt wird. Weil der Strom durch eine Laserdiode üblicherweise einen vergleichsweise definierten und reproduzierbaren Verlauf aufweist, ist der Startpunkt für die Zeitmessung vergleichsweise gut definiert.

Anspruchsvoller ist die Situation beim Messen des Empfangspulses, wesentlich deshalb, weil die Lichtpulse im praktischen Messbetrieb von optisch sehr unterschiedlichen Objekten reflektiert werden und darüber hinaus in der Regel eine Vielzahl von Grenzflächen, wie beispielsweise eine Frontscheibe des Sensors, durchlaufen. Die Lichtpulse sind deshalb im Verlauf ihres Wegs vom Sender über das Objekt zum Empfänger einer Vielzahl von nicht genau definierten Beeinflussungen unterworfen und werden durch diese in der Pulshöhe und der Pulsbreite verändert.

Um in diesem Zusammenhang eine Korrekturmöglichkeit bereitzustellen, wird bei der in Figur 2 im unteren Diagramm dargestellten Situation nicht nur ein Empfangszeitpunkt gemessen, sondern es wird zunächst derjenige Zeitpunkt t2 ermittelt, zu dem eine ansteigende Flanke des Empfangspulses 32 eine gewählte Schwelle 36 durchstößt und außerdem wird der Zeitpunkt t3 gemessen, an dem die abfallende Flanke des Empfangspulses 32 die Schwelle 36 durchstößt. Es ist unmittelbar ersichtlich, dass bei höheren und breiteren Pulsen der Zeitpunkt t2 im Diagramm der Figur 2 nach links und der Zeitpunkt t3 entsprechend nach rechts wandert. In dem durch die Messung diese beiden Zeitpunkte bereitgestellt werden, erhält man eine Information über die Pulsbreite, die für eine Korrektur der Zeitmessung verwendet werden kann.

Die Zeitmessung als solche, also die Messung der Zeit zwischen den Zeitpunkten t2 und t1 beziehungsweise den Zeitpunkten t3 und t1 erfolgt mit grundsätzlich bekannten Mitteln.

Verbesserungsbedarf besteht im Hinblick auf die Messung des Zeitpunkts t3, also des Zeitpunkts, zu dem die abfallende Flanke des Empfangspulses 32 die Schwelle 36 durchstößt. Weil die abfallende Flanke des Empfangspulses wegen der Vielzahl der beschriebenen Beeinflussungen des Pulses vergleichsweise schlecht definiert ist, ist auch die Messung dieses Zeitpunkts relativ ungenau.

Ein erster wesentlicher Ansatz der vorliegenden Erfindung kann darin gesehen werden, dass zur Bestimmung des Empfangszeitpunkts eines Lichtpulses nur noch die vergleichsweise viel besser definierte ansteigende Flanke des Empfangspulses herangezogen wird. Ausgehend von dem weiteren wesentlichen Befund, dass die Messung eines einzigen Zeitpunkts allein keine hinreichende Information über den Empfangszeitpunkt des Lichtpulses liefern kann, besteht die wesentliche Idee der vorliegenden Erfindung darin, anstelle von Lichtpulsen mit nur einer Pulshöhe oder einer Pulsenergie, Lichtpulse mit mindestens zwei verschiedenen Pulshöhen oder Pulsenergien zu verwenden.

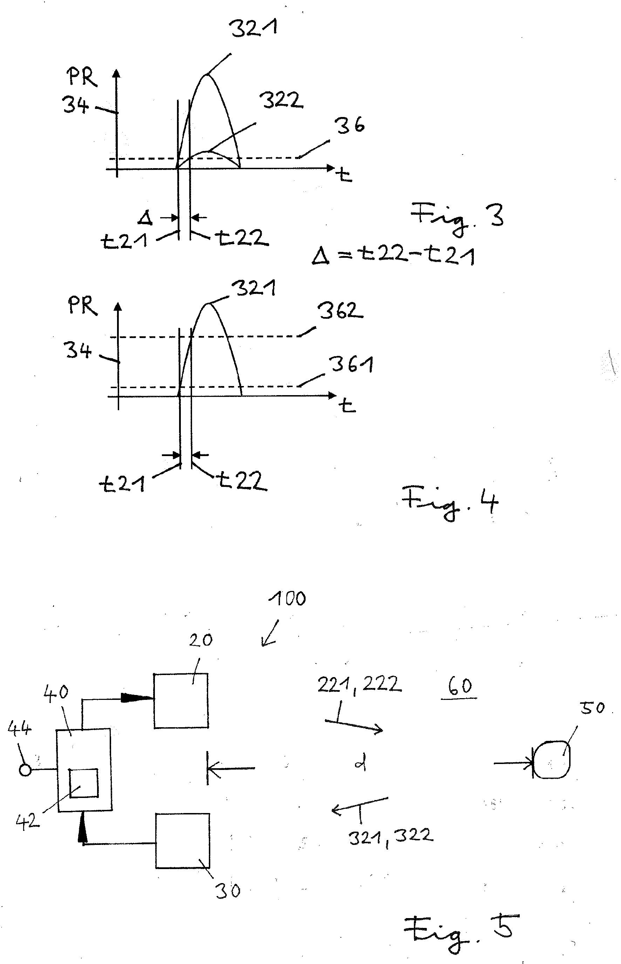

Dieses grundlegende Prinzip der Erfindung wird mit Bezug auf Figur 3 erläutert. In dem Diagramm der Figur 3 ist, wie in Figur 2 unten, die Empfangsleistung PR gegen die Zeit t aufgetragen. Figur 3 zeigt einen ersten (stärkeren) Empfangspuls 321 und einen zweiten (schwächeren) Empfangspuls 322. Der erste Empfangspuls 321 und der zweite Empfangspuls 322 sind in dem Sinn gleichzeitig, als ihre Maxima in dieser schematischen Darstellung der Figur 3 zusammenfallen. In der Praxis wird das wohl im Wesentlichen ebenfalls so sein. Es kommt darauf aber nicht an, weil die Position der Maxima nicht gemessen wird. Bei Verwendung von ein und derselben Schwelle 36 durchstößt die ansteigende Flanke des stärkeren ersten Empfangspulses 321 die Schwelle 36 zu einem früheren Zeitpunkt t21 als der schwächere zweite Empfangspuls 322, der die Schwelle 36 erst danach zu einem mit t22 bezeichneten Zeitpunkt durchstößt.

Die vorliegende Erfindung hat erkannt, dass in den unterschiedlichen Zeitpunkten t21 und t22 eine Information über die Steilheit der ansteigenden Flanke beispielsweise des stärkeren ersten Empfangspulses 321 enthalten ist. Einsichtig wird das, wenn man sich vergegenwärtigt, dass bei Verwendung jeweils desselben zweiten Empfangspulses 322 die Differenz zwischen den Zeitpunkten t22 und t21 umso größer wird, je steiler die Flanke des ersten Empfangspulses 321 ist.

Bei dem erfindungsgemäßen Verfahren werden also im Prinzip eine erste Messung der Pulslaufzeit durchgeführt mit einem Lichtpuls 321 mit hoher Pulsenergie und eine zweite Messung der Pulslaufzeit mit einem Lichtpuls 322 mit vergleichsweise schwacher Pulsenergie. Als Maß für die Pulsenergie wird sodann der Laufzeitunterschied zwischen beiden Messungen herangezogen.

Dieses Verfahren weist Ähnlichkeiten auf zu einer Messung, bei der die Anstiegszeit der Empfangspulse gemessen wird unter Verwendung von zwei verschiedenen Komparatorschwellen. Hierzu macht man sich klar, dass die Verwendung von Lichtpulsen 321, 322 mit unterschiedlicher Höhe und einer einzigen Schwelle 36 äquivalent ist zur Verwendung nur eines Typs von Lichtpulsen 321, aber zwei unterschiedlichen Schwellen 361, 362. Diese Situation ist in Figur 4 dargestellt. Wie dort ersichtlich durchstößt der Puls 321 die niedrigere Schwelle 361 (die im gezeigten Beispiel gleich hoch sein soll wie die Schwelle 36 aus Figur 3) zum Zeitpunkt t21 und die höhere Schwelle 362 zum Zeitpunkt t22. Die höhere Schwelle 362 ist dabei so gewählt, dass der Zeitpunkt t22 der Figur 4 identisch ist zu dem Zeitpunkt t22 der Figur 3.

Die Anstiegszeit kann man jedoch mit zwei Komparatorschwellen nicht mit der benötigten Auflösung und Genauigkeit ermitteln. Die Gründe hierfür sind, dass die Bandbreite des verwendeten Empfängers die kürzestmögliche Anstiegszeit begrenzt, sodass hohe Pulsenergien nicht mehr unterscheidbar sind. Außerdem steht die begrenzte zeitliche Auflösung der verfügbaren Zeit-Digital-Konverter (TDC) einer Messung mit der gewünschten Genauigkeit entgegen. Schließlich weisen die verfügbaren Empfänger nicht die notwendige Dynamik auf.

Wesentlich für die hier beschriebene Erfindung ist, dass eine Information über die Steilheit der Anstiegsflanke in gewissen Grenzen äquivalent ist zu einer Information über eine Pulsbreite der empfangenen Lichtpulse. Je steiler die Anstiegsflanke des Lichtpulses, umso größer ist dessen Pulsenergie. Die Delta-Amplitude, mithin die Differenz der gemessenen Empfangszeitpunkte, kann damit zur Korrektur der Laufzeiten verwendet werden.

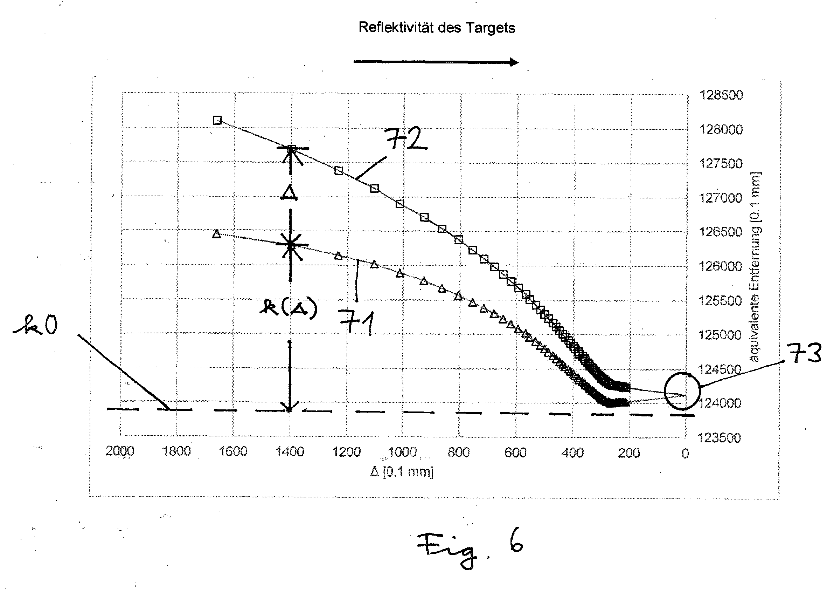

Figur 6 zeigt zwei experimentell aufgenommene Kalibrierkurven 71, 72. Aufgetragen sind jeweils die für Lichtpulse mit hoher Pulsenergie (Kalibrierkurve 71) beziehungsweise Lichtpulse mit niedriger Pulsenergie (Kalibrierkurve 72) gemessenen äquivalenten Entfernungswerte gegen die Differenz Δ dieser Entfernungswerte Die äquivalenten Entfernungswerte sind wegen des Zusammenhangs

Entfernung = Lichtgeschwindigkeit mal Laufzeit

direkt proportional zur Laufzeit. Die vertikale Achse ist deshalb äquivalent zu einer Zeitachse.

Die Daten in Figur 6 wurden mit einem Messaufbau gewonnen, bei dem ein reflektierendes Target als Testobjekt in einem gleichbleibenden Abstand relativ zum optoelektronischen Sensor positioniert wurde und die Reflektivität des Targets definiert variiert wurde. In dem in Figur 6 gezeigten Diagramm nimmt die Reflektivität des Testobjekts von links nach rechts kontinuierlich zu. Die Empfangszeitpunkte sowohl der vergleichsweise starken Lichtpulse (Kalibrierkurve 71) als auch der vergleichsweise schwachen Lichtpulse (Kalibrierkurve 72) wandern vom Wert etwa Δ=1600*0,1mm auf der horizontalen Skala bis zum Wert etwa Δ=300*0,1mm auf der horizontalen Skala kontinuierlich in Richtung früherer Empfangszeitpunkte. Das ist einsichtig, denn wegen der von links nach rechts ansteigenden Reflektivität des Testobjekts werden die empfangenen Lichtpulse (sowohl die vergleichsweise starken Lichtpulse, Kalibrierkurve 71, als auch die vergleichsweise schwachen Lichtpulse, Kalibrierkurve 72) im Diagramm in Figur 6 von links nach rechts stärker. Das bedeutet, dass die Anstiegsflanken der empfangenen Lichtpulse jeweils steiler werden und die gewählte Schwelle entsprechend früher durchstoßen.

Die tatsächlichen Messpunkte der Kalibrierkurve 71 für die vergleichsweise starken Lichtpulse sind Figur 6 mit Dreiecken und diejenigen der Kalibrierkurve 2 für die vergleichsweise schwachen Lichtpulse sind mit Quadraten dargestellt. Die Verläufe zwischen diesen Messpunkten wurden interpoliert.

Eine Sondersituation liegt im Bereich zwischen etwa Δ=300*0,1 mm und 0 auf der horizontalen Skala vor. Dieser Bereich entspricht dem Regime besonders starker Empfangspulse, bei denen der Empfänger übersteuert wird. Wie aus Figur 6 ersichtlich, reichen die tatsächlichen Messwerte bis etwa zum Wert Δ=200*0,1mm auf der horizontalen Skala.

Eine tatsächliche Entfernung des Testobjekts ist in Figur 6 durch eine horizontale Gerade k0 repräsentiert. Diese tatsächliche Entfernung ist naturgemäß unabhängig von der Reflektivität des Testobjekts. Es ist aber klar, dass die Gerade k0 ihrerseits nur bis auf eine additive Konstante festgelegt ist. Für die tatsächliche exakte Entfernung kommt es darauf an, wo, bezogen auf den optoelektronischen Sensor, der Nullpunkt der Entfernungsmessung festgelegt wird.

Ein wesentlicher Gesichtspunkt des Diagramms in Figur 6 besteht darin, dass einer gemessenen Differenz Δ eindeutig eine Laufzeitkorrektur oder, was äquivalent ist, eine Entfernungskorrektur k(Δ) zugeordnet werden kann. Diese Entfernungskorrektur k(Δ) kann, wie in Figur 6 beispielhaft dargestellt, auf die Kalibrierkurve 71 für die vergleichsweise starken Lichtpulse bezogen werden. Es ist aber äquivalent, wenn für die Entfernungskorrektur die Differenz zwischen der Geraden k0 und der Kalibrierkurve 72 verwendet wird. Eine so gewonnene Entfernungskorrektur müsste dann auf die für die schwachen Lichtpulse gewonnenen Messwerte angewendet werden. Weil k0, wie besprochen, nur bis auf eine additive Konstante festgelegt ist, ist auch die Entfernungskorrektur k(Δ) nur bis auf eine additive Konstante festgelegt.

Ein weiterer wesentlicher Vorteil des erfindungsgemäßen Verfahrens zeigt sich im Zusammenhang mit der Aufnahme der notwendigen Kalibrierkurven. Um Amplituden mit hohem Signalpegel zu erfassen, müssen diese mit einem stark reflektieren Ziel in kurzem Abstand zum elektrooptischen Sensor aufgenommen werden. Bei solchen kurzen Abständen zum Sensor treten jedoch sogenannte optische Nahbereichseffekte und auch ein elektrisches Sender-Empfänger-Übersprechen auf, wodurch die gemessenen Amplitudenfehler nicht ausschließlich der veränderten Amplitude zugeschrieben werden können. Es ist deshalb zwingend notwendig, die Amplitudenkompensation unter Auslassung hoher Amplituden im optischen und elektrischen Fernbereich aufzunehmen. Der nicht erfasste Bereich hoher Amplituden muss anschließend extrapoliert werden.

Im Vergleich zum Stand der Technik, bei dem Pulsbreiten ausgewertet wurden, ergeben sich bei dem erfindungsgemäßen Verfahren Vorteile in dem Regime für sehr starke Lichtpulse, bei denen der Empfänger übersteuert wird. Für das erfindungsgemäße Messprinzip darf angenommen werden, dass die Empfangszeitpunkte, mithin die Zeitpunkte, zu denen die Schwelle 36 durchstoßen wird, für die Kalibrierkurven 71 und 72 im Grenzfall unendlich starker Pulse und damit unendlich steiler Anstiegsflanken auf ein und denselben Empfangszeitpunkt zulaufen. Dieser gemeinsame Punkt, auf den die Kalibrierkurven 71 und 72 aufgrund dieser Überlegung zulaufen müssen, ist in Figur 6 durch den Kreis 73 hervorgehoben. Zwischen den Messpunkten, die für beide Kalibrierkurven 71, 72 bis etwa Δ=200*0,1mm verfügbar sind, und diesem gemeinsamen Punkt, der bei etwa 124100*0,1mm auf der vertikalen Achse lokalisiert ist, kann mit dieser zusätzlichen Annahme interpoliert werden.

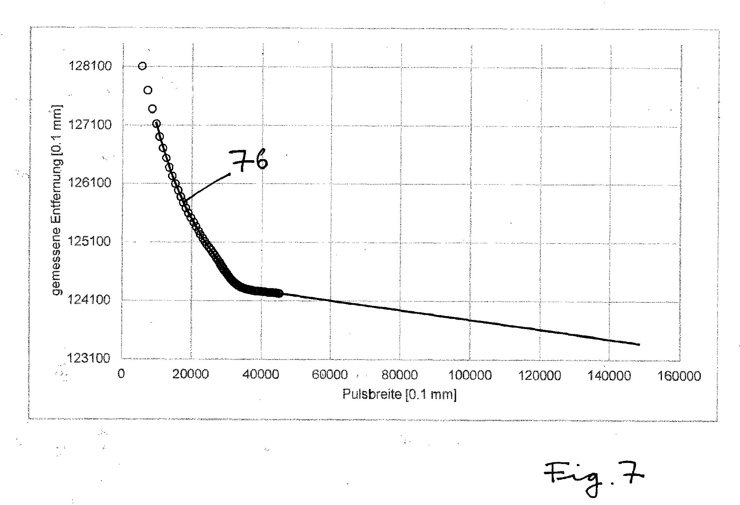

Im Vergleich dazu zeigt Figur 7 eine Kalibrierkurve 76 aus dem Stand der Technik. Aufgetragen ist dort eine gemessene Entfernung (vertikale Achse) gegen die gemessene Pulsbreite. Die Pulsbreite wurde dabei, wie oben erläutert, bestimmt, indem die Zeitpunkte, zu denen die ansteigende Flanke eines empfangenen Lichtpulses und die abfallende Flanke dieses Lichtpulses eine Schwelle durchstoßen, gemessen wurden. Wegen der Übersteuerung der Empfänger bei sehr intensiven Pulsen stehen bei dem Diagramm aus Figur 7 Messwerte nur bis zu einer Pulsbreite von etwa 46000*0,1 mm zur Verfügung. Weil, abweichend zu der Situation der Kalibrierkurven 71, 72 für das erfindungsgemäße Verfahren in Figur 6, keine sinnvolle Annahme für den Verlauf der Kalibrierkurve 76 für Werte der Pulsbreite größer als 50000*0,1mm getroffen werden kann, muss von dem Verlauf in der unmittelbaren Umgebung vor 46000*0,1mm extrapoliert werden. Wegen der bestehenden Messunsicherheiten folgen hieraus, je weiter man sich von 46000*0,1mm entfernt, erhebliche Unsicherheiten dieses extrapolierten Verlaufs. Bei der herkömmlichen Amplitudenkompensation hat man also keinen Anhaltspunkt für die Extrapolation. Je nachdem, welche Messwerte für die Extrapolation herangezogen werden, verändert sich die Steigung und damit der Fehler der Extrapolationsgeraden. Je weiter ein zu kompensierender Amplitudenwert vom letzten gemessenen Wert auf der Extrapolation geraden entfernt ist, desto größer ist auch der Extrapolationsfehler.

Die Erfindung leistet hier, wie im Zusammenhang mit Figur 6 erläutert, erhebliche Verbesserungen, denn je höher bei dem erfindungsgemäßen Verfahren (Delta-Amplituden-Kompensation) die Pulsenergie der empfangenen Lichtpulse ist, desto geringer wird die gemessene Delta-Amplitude, die auch als Delta-Entfernungsdifferenz bezeichnet werden kann. Dieses hat zur Folge, dass die Unsicherheit für die extrapolierten Amplituden maximal so groß werden kann wie die halbe Delta-Entfernungsdifferenz. In Figur 6 beträgt dieser Wert 10 mm. Durch eine einfache lineare Extrapolation liegt dieser Fehler in der Praxis noch viel niedriger und kann insbesondere kleiner sein als 1 mm.

Figur 5 zeigt eine schematische Darstellung eines erfindungsgemäßen optoelektronischen Sensors 100. Der erfindungsgemäße optoelektronische Sensor 100 ist strukturell ähnlich aufgebaut wie ein Sensor aus dem Stand der Technik. Unterschiede bestehen im Bereich der Steuer- und Auswerteeinheit 40. Diese ist erfindungsgemäß dazu eingerichtet, die Sendeeinheit 20 zum Aussenden von Lichtpulsen 221, 222 mit mindestens zwei verschiedenen Pulsenergien anzusteuern und abhängig von einer Differenz der für die verschiedenen Pulsenergien gemessenen Empfangszeitpunkte $t221$, $t222$ der empfangenen Lichtpulse 321, 322 den Empfangszeitpunkt mit einem Korrekturwert $k(\Delta)$ zu korrigieren. Zweckmäßig weist die Steuer- und Auswerteeinheit 40 zum Abspeichern der Kalibrierinformation in der Art der Kalibrierkurven 71, 72 einen Speicher 42 auf.

Zum Ausgeben von Messdaten kann der optoelektronische Sensor 100 eine Schnittstelle 44, beispielsweise eine Busschnittstelle, aufweisen.

Mit der vorliegenden Erfindung wird ein neuartiges Verfahren zum Bestimmen eines Abstands von Objekten mithilfe von optoelektronischen Sensoren nach dem Laufzeitverfahren bereitgestellt. Dieses Verfahren zeichnet sich durch besonders vielseitige Verwendungsmöglichkeiten, eine besonders hohe Dynamik der verwendbaren Lichtpulse und durch eine besonders hohe Genauigkeit, insbesondere bei sehr starken Lichtpulsen aus.

Im Wesentlichen löst die Erfindung die Aufgabe dadurch, dass mit aufeinanderfolgenden Lichtpulsen mit unterschiedlicher Amplitude gemessen wird. Die Begriffe Amplitude, Pulsenergie und Pulshöhe werden hier Im Wesentlichen synonym verwendet. Beim Aussenden des gesendeten Lichtpulses wird eine Zeitmessung gestartet, die beispielsweise durch das Überschreiten einer festgelegten Schwelle durch das Echosignal beendet wird. Als Echosignal wird hier dasjenige Empfangssignal bezeichnet, welches durch einen von einem Objekt zurückgestrahlten Lichtpuls ausgelöst wird. Für jeden einzelnen gesendeten Lichtpulse wird eine Laufzeitmessung durchgeführt, die mit einem Amplitudenfehler behaftet ist.

Die Auswerteeinheit kann so ausgebildet sein, dass sie die Zeitdifferenz zwischen zwei aufeinanderfolgenden Einzelmessungen mit unterschiedlicher Sendeamplituden bestimmen kann.

Der Erfindung liegt die Erkenntnis zugrunde, dass in der Zeitdifferenz aufeinanderfolgender Messungen mit unterschiedlicher Amplitude Information über die Amplitude der Echosignale enthalten sind.

Zur Korrektur des Entfernungsmesswertes des amplitudenfehlerbehafteten Einzelmesswerts kann eine Speichereinrichtung vorgesehen sein, in der zumindest eine empirisch gewonnene Korrekturtabelle oder-kurve enthalten sein kann. Diese Korrekturtabelle oder -kurve kann Korrekturwerte enthalten, die für wenigstens eine konstante Kalibrierentfernung jeweils mit verschiedenen Kalibrieramplituden durchgeführten Kalibriermessungen erhalten wurden. Der Korrekturtabelle kann prinzipiell für jede gemessene Zeitdifferenz von aufeinanderfolgenden Einzelmessungen mit unterschiedlichen Pulsenergien der Lichtpulse ein entsprechender Korrekturwert entnommen werden.

Eine Messung, deren Messergebnis bezüglich des Amplitudenfehlers korrigiert ist, besteht aus mindestens zwei aufeinanderfolgenden Einzelmessungen, bei der insbesondere eine erste Messung mit einer niedrigen Sendeamplitude und eine zweite Messung mit einer höheren Sendeamplitude durchgeführt wird. Die Korrektur erfolgt anhand der Zeitdifferenz zwischen den beiden Einzelmessungen anhand der empirisch ermittelten Korrekturtabelle oder -kurve.

Bezugszeichenliste

| 10 | gattungsgemäßer optoelektronischer Sensor |
| 100 | erfindungsgemäßer optoelektronischer Sensor |
| 20 | Sendeeinheit |
| 22 | gesendeter Lichtpuls |
| 221 | gesendeter Lichtpuls mit erster, höherer Pulsenergie |
| 222 | gesendeter Lichtpuls mit zweiter, niedrigerer Pulsenergie |
| 30 | Empfangseinheit |
| 32 | zurückgestrahlte Lichtpuls |
| 321 | detektierter Lichtpuls mit erster, höherer Pulsenergie |
| 322 | detektierter Lichtpuls mit zweiter, niedrigerer Pulsenergie |
| 36 | Schwelle |
| 361 | erste, niedrigere Schwelle |
| 362 | zweite, höhere Schwelle |
| 40 | Steuer- und Auswerteeinheit |
| 50 | zu vermessendes Objekt |
| 60 | Erfassungsbereich |
| 71 | Kalibrierkurve für Lichtpulse mit erster, höherer Pulsenergie |
| 72 | Kalibrierkurve für Lichtpulse mit zweiter, niedrigerer Pulsenergien |
| 73 | Kreis, Grenzbereich unendlich steiler Anstiegsflanken der Lichtpulse |
| 76 | Kalibrierkurve für herkömmliche Amplitudenkompensation |
| d | Entfernung des Objekts 50 |
| $\Delta$ | Differenz der für verschiedene Pulsenergien gemessenen Empfangszeitpunkte |
| $k(\Delta)$ | Korrekturwert, Entfernungskorrektur |
| k0 | horizontale Gerade |
| t1 | Aussendezeitpunkt eines Lichtpulses |
| t2 | Empfangszeitpunkt eines Lichtpulses 32 |
| t3 | Zeitpunkt, zu dem die abfallende Flanke des Empfangspulses die Schwelle 36 durchstößt |
| t21 | Empfangszeitpunkt eines Lichtpulses |
| t22 | Empfangszeitpunkt eines Lichtpulses |
| t221 | Empfangszeitpunkt eines Lichtpulses |
| t222 | Empfangszeitpunkt eines Lichtpulses |

**Patentansprüche**

1. Verfahren zum Messen einer Entfernung von Objekten, bei dem

eine Sendeeinheit (20) Lichtpulse (22) aussendet,
eine Empfangseinheit (30) von einem zu vermessenden Objekt (50) zurückgestrahlte Lichtpulse (32) detektiert und
aus einer Zeitdifferenz zwischen einem Empfangszeitpunkt (t2) eines Lichtpulses (32) und einem Aussendezeitpunkt (t1) dieses Lichtpulses (22) eine Entfernung (d) des Objekts (50) bestimmt wird,
wobei Lichtpulse (221, 222) mit mindestens zwei verschiedenen Pulsenergien ausgesendet werden und
wobei als Empfangszeitpunkt (t21, t22) eines detektierten Lichtpulses derjenige Zeitpunkt gewertet wird, zu dem eine ansteigende Flanke des detektierten Lichtpulses (321, 322) eine Schwelle (36) durchstößt,
wobei einer Differenz ($\Delta$) von Empfangszeitpunkten (t21, t22), die für zwei verschiedene Pulsenergien gemessen werden, ein Korrekturwert (k($\Delta$)) zugeordnet wird,
wobei einer der Empfangszeitpunkte (t21, t22), insbesondere derjenige Empfangszeitpunkt (t21), der für den Lichtpuls (221) mit höherer Pulsenergie erhalten wird, korrigiert wird, indem der Korrekturwert (k($\Delta$)) von diesem Empfangszeitpunkt (t21) subtrahiert wird und
wobei für verschiedene Differenzen ($\Delta$) der für die zwei verschiedenen Pulsenergien gemessenen Empfangszeitpunkte (t21, t22) die Korrekturwerte (k($\Delta$)) durch Kalibrierungsmessungen gewonnen werden.

2. Verfahren nach Anspruch 1,
**dadurch gekennzeichnet,**
**dass** Kalibrierkurven (71, 72) ermittelt werden, die jedem Paar von Empfangszeitpunkten (t221, t222), die für ein bestimmtes Paar von gesendeten Lichtpulsen (221, 222) mit unterschiedlicher Pulsenergie gewonnen werden, ein Korrekturwert (k(($\Delta$)) zugeordnet wird.

3. Verfahren nach Anspruch 2,
**dadurch gekennzeichnet,**
**dass** Kalibrierkurven (71, 71) ermittelt werden für unterschiedliche Abstände der Pulsenergien der gesendeten Lichtpulse (221, 222).

4. Verfahren nach einem der Ansprüche 1 bis 3,

**dadurch gekennzeichnet,**
**dass** vor einer Messung unterschiedliche Pulsenergien der gesendeten Lichtpulse (221, 222) und unterschiedliche Abstände der Pulsenergien der gesendeten Lichtpulse (221, 222) für ein zu vermessendes Objekt (50) getestet werden und
**dass** die Messung mit einer Pulsenergie der gesendeten Lichtpulse (221, 222) und einem Abstand der Pulsenergien (221, 222) durchgeführt wird, bei denen gemäß den Kalibrierkurven (71, 72) eine möglichst geringe Messunsicherheit erreicht wird.

5. Verfahren nach einem der Ansprüche 1 bis 4,
**dadurch gekennzeichnet,**
**dass** Messungen mit mehreren verschiedenen Paaren von verschiedenen Pulsenergien der gesendeten Lichtpulse durchgeführt werden.

6. Verfahren nach einem der Ansprüche 1 bis 5,
**dadurch gekennzeichnet,**
**dass** die detektierten Lichtpulse (321, 322) mit mehr als einer Schwelle (36, 362) verglichen werden.

7. Verfahren nach einem der Ansprüche 1 bis 6,
**dadurch gekennzeichnet,**
**dass** die Pulsenergien der gesendeten Lichtpulse in einem Messzyklus variiert werden.

8. Verfahren nach einem der Ansprüche 1 bis 7,
**dadurch gekennzeichnet,**
**dass** die Pulsenergieabstände der gesendeten Lichtpulse in einem Messzyklus in einer Rampe hochgefahren werden, gemäß einer Dreiecksfunktion und/oder gemäß einer Sägezahnfunktion variiert werden.

9. Optoelektronischer Sensor zum Messen einer Entfernung von Objekten

mit einer Sendeeinheit (20) zum Aussenden von Lichtpulsen (22) in einen Erfassungsbereich (60),
mit einer Empfangseinheit (30) zum Detektieren von Lichtpulsen (32), die von einem zu vermessenden Objekt (50) im Erfassungsbereich (60) zurückgestrahlt werden, und
mit einer Steuer- und Auswerteeinheit (40) zum Ansteuern der Sendeeinheit (20) und zum Auswerten der von der Empfangseinheit (30) detektierten Lichtpulse (32),
wobei die Steuer- und Auswerteeinheit (40) dazu eingerichtet ist, aus einer Zeitdifferenz zwischen einem Empfangszeitpunkt (t2) eines Lichtpulses (32) und einem Aussendezeitpunkt (t1) dieses Lichtpulses (22) eine Entfernung (d) des zu vermessenden Objekts (50) zu bestimmen,

die Sendeeinheit (20) zum Aussenden von Lichtpulsen (221, 222) mit mindestens zwei verschiedenen Pulsenergien anzusteuern und

als Empfangszeitpunkt (t21, t22) eines detektierten Lichtpulses denjenigen Zeitpunkt zu werten, zu dem eine ansteigende Flanke des detektierten Lichtpulses (321, 322) eine Schwelle (36) durchstößt, wobei die Steuer-und Auswerteeinheit (40) außerdem dazu eingerichtet ist, einer Differenz ($\Delta$) von Empfangs-zeitpunkten (t21, t22), die für zwei verschiedene Pulsenergien gemessen werden, einen Korrekturwert (k($\Delta$)) zuzuordnen, einen der Empfangszeitpunkte (t21, t22), insbesondere denjenigen Empfangszeitpunkt (t21), der für den Lichtpuls (221) mit höherer Pulsenergie erhalten wird, zu korrigieren, indem der Korrekturwert (k($\Delta$)) von diesem Empfangszeitpunkt (t21, t22) subtrahiert wird, und

für verschiedene Differenzen ($\Delta$) der für die zwei verschiedenen Pulsenergien gemessenen Empfangszeitpunkte (t21, t22) die Korrekturwerte (k($\Delta$)) durch Kalibrierungsmessungen zu gewinnen.

10. Optoelektronischer Sensor nach Anspruch 9,

**dadurch gekennzeichnet,**
**dass** die Steuer- und Auswerteeinheit (40) dazu eingerichtet ist, dass Verfahren nach einem der Ansprüche 1 bis bei dem optoelektronischen Sensor durchzuführen.


**Claims**

1. Method for measuring a range of objects wherein

a transmission unit (20) transmits light pulses (22),
a reception unit (30) detects light pulses (32) radiated back from an object (50) to be measured and
a range (d) of the object (50) is determined from a time difference between a reception time (t2) of a light pulses (32) and a transmission time (t1) of this light pulse (22),
wherein light pulses (221, 222) having at least two different pulse energies are transmitted and
wherein, as reception time (t21, t22) of a detected light pulse, the time is taken when a rising slope of the detected light pulse (321, 322) rises above a threshold (36),
wherein a correction value (k($\Delta$)) is attributed to a difference ($\Delta$) of reception times (t21, t22) which are measured for two different pulse energies, wherein one of the reception times (t21, t22), in particular the reception time (t21), which is measured for the light pulse (221) having the higher pulse energy, is corrected by subtracting the correction value (k($\Delta$)) from this reception time (t21) and wherein, for different differences ($\Delta$) of the reception times (t21, t22) measured for the two different pulse energies, the correction values (k($\Delta$)) are obtained by calibration measurements.

2. Method according to claim 1,
**characterized in**
**that** calibration curves (71, 72) are determined which attribute a correction value (k($\Delta$)) to each pair of reception times (t221, t222) which are measured for a specific pair of transmitted light pulses (221, 222) having different pulse energies.

3. Method according to claim 2,
**characterized in**
**that** calibration curves (71, 72) are determined for different spacings of the pulse energies of the transmitted light pulses (221, 222).

4. Method according to one of the claims 1 to 3,
**characterized in**
**that** before a measurement different pulse energies of the transmitted light pulses (221, 222) and different spacings of the pulse energies of the transmitted light pulses (221, 222) are tested for an object (50) to be measured and that the measurement is carried out with a pulse energy of the transmitted light pulses (221, 222) and a spacing of the pulse energies (221, 222) with which, according to the calibration curves (71, 72), an as small as possible measurement uncertainty is achieved.

5. Method according to one of the claims 1 to 4,
**characterized in**

**that** measurements are carried out with a plurality of different pairs of different pulse energies of the transmitted light pulses.

6. Method according to one of the claims 1 to 5,
   **characterized in**
   **that** the detected light pulses (321, 322) are compared with more than one threshold (36, 362).

7. Method according to one of the claims 1 to 6,
   **characterized in**
   **that** the pulse energies of the transmitted light pulses are varied in a measurement cycle.

8. Method according to one of the claims 1 to 7,
   **characterized in**
   **that** the spacings of the pulse energies of the transmitted light pulses are ramped up in the measurement cycle or are varied according to a triangle function and/or a sawtooth function.

9. Optoelectronic sensor for measuring a range of objects having a transmission unit (20) for transmitting light pulses (22) into a capturing region (60),

   having a reception unit (30) for detecting light pulses (32) radiated back from an object (50) to be measured in the capturing region (60), and
   a control and evaluation unit (40) for controlling the transmission unit (20) and for evaluating of light pulses (32) detected by the reception unit (30),
   wherein the control and evaluation unit (40) is designed for determining a range (d) of the object (50) to be measured from a time difference between a reception time (t2) of a light pulse (32) and a transmission time (t1) of this light pulse (22),
   driving the transmission unit (20) so as to transmit light pulses (221, 222) having at least two different pulse energies,
   taking as a reception time (t21, t22) of a detected light pulse the time when a rising slope of the detected light pulse (321, 322) rises above a threshold (36), wherein the control and evaluation unit (40) is furthermore designed for attributing a correction value (k($\Delta$)) to a difference ($\Delta$) of reception times (t21, t22) which are measured for two different pulse energies,
   correcting one of the reception times (t21, t22), in particular the reception time (t21) which is obtained for the light pulse (221) having the higher pulse energy, by subtracting the correction value (k($\Delta$)) from this reception time and obtain the calibration values (k($\Delta$)) for different differences ($\Delta$) of the reception times (t21, t22) measured for the two different pulse energies by calibration measurements.

10. Optoelectronic sensor according to claim 9,
    **characterized in that**
    the control and evaluation unit (40) is designed for carrying out the method according to 1 of the claims 1 to 8 with the optoelectronic sensor.

**Revendications**

1. Procédé destiné à mesurer un éloignement d'objets, par lequel

   une unité d'envoi (20) envoie des impulsions lumineuses (22),
   une unité de réception (30) détecte des impulsions lumineuses (32) renvoyées par un objet (50) à mesurer et
   un éloignement (d) de l'objet (50) est déterminé à partir d'une différence temporelle entre un point temporel de réception (t2) d'une impulsion lumineuse (32) et un point temporel d'envoi (t1) de cette impulsion lumineuse (22),
   dans lequel des impulsions lumineuses (221, 222) sont envoyées avec au moins deux énergies d'impulsion différentes et
   dans lequel, en tant que point temporel de réception (t21, t22) d'une impulsion lumineuse détectée, est évalué le point temporel vers lequel un front montant de l'impulsion lumineuse (321, 322) détectée transperce un seuil (36), dans lequel une valeur de correction (k($\Delta$)) est attribuée à une différence ($\Delta$) de points temporels de réception (t21, t22) qui sont mesurés pour deux énergies d'impulsion différentes,
   dans lequel un des points temporels de réception (t21, t22), en particulier le point temporel de réception (t21) qui est obtenu pour l'impulsion lumineuse (221) avec une énergie d'impulsion plus élevée, est corrigé en ce que la valeur de correction (k(Δ)) est soustraite de ce point temporel de réception (t21) et

dans lequel, pour des différences (Δ) différentes des points temporels de réception (t21, t22) mesurés pour les deux énergies d'impulsion différentes, les valeurs de correction (k(Δ)) sont obtenues par des mesures d'étalonnage.

2. Procédé selon la revendication 1,
**caractérisé en ce que**
des courbes d'étalonnage (71, 72) sont établies, auxquelles une valeur de correction (k((Δ)) est attribuée à chaque paire de points temporels de réception (t221, t222) qui sont obtenus pour une paire déterminée d'impulsions lumineuses (221, 222) envoyées avec une énergie d'impulsion différente.

3. Procédé selon la revendication 2,
**caractérisé en ce que**
des courbes d'étalonnage (71, 72) sont établies pour des distances différentes des énergies d'impulsion des impulsions lumineuses (221, 222) envoyées.

4. Procédé selon l'une des revendications 1 à 3,

   **caractérisé en ce que**
   avant un mesurage, des énergies d'impulsion différentes des impulsions lumineuses (221, 222) envoyées et des distances différentes des énergies d'impulsion des impulsions lumineuses (221, 222) envoyées sont testées pour un objet (50) à mesurer et
   le mesurage est réalisé avec une énergie d'impulsion des impulsions lumineuses (221, 222) et une distance des énergies d'impulsion (221, 222), pour lesquelles une incertitude de mesure aussi réduite que possible est atteinte par référence à des courbes d'étalonnage (71, 72).

5. Procédé selon l'une des revendications 1 à 4,
**caractérisé en ce que**
des mesurages sont réalisés avec plusieurs paires différentes d'énergies d'impulsion différentes des impulsions lumineuses envoyées.

6. Procédé selon l'une des revendications 1 à 5,
**caractérisé en ce que**
les impulsions lumineuses (321, 322) détectées sont comparées avec plus d'un seuil (36, 362).

7. Procédé selon l'une des revendications 1 à 6,
**caractérisé en ce que**
les énergies d'impulsion des impulsions lumineuses envoyées sont modifiées dans un cycle de mesure.

8. Procédé selon l'une des revendications 1 à 7,
**caractérisé en ce que**
les distances d'énergie d'impulsion des impulsions lumineuses envoyées sont augmentées dans une rampe dans un cycle de mesure, sont modifiées selon une fonction triangulaire et/ou selon une fonction en dents de scie.

9. Capteur optoélectronique destiné à mesurer un éloignement d'objets

   avec une unité d'envoi (20) pour envoyer des impulsions lumineuses (22) jusque dans une zone de saisie (60),
   avec une unité de réception (30) pour détecter des impulsions lumineuses (32) qui sont renvoyées par un objet (50) à mesurer dans la zone de saisie (60), et
   avec une unité de commande et d'exploitation (40) pour commander l'unité d'envoi (20) et exploiter les impulsions lumineuses (32) détectées par l'unité de réception (30),
   dans lequel l'unité de commande et d'exploitation (40) est conçue pour déterminer un éloignement (d) de l'objet (50) à mesurer à partir d'une différence temporelle entre un point temporel de réception (t2) d'une impulsion lumineuse (32) et un point temporel d'envoi (t1) de cette impulsion lumineuse (22),
   commander l'unité d'envoi (20) pour envoyer des impulsions lumineuses (221, 222) avec au moins deux énergies d'impulsion différentes et
   en tant que point temporel de réception (t21, t22) d'une impulsion lumineuse détectée, évaluer le point temporel vers lequel un front montant de l'impulsion lumineuse (321, 322) détectée transperce un seuil (36),

dans lequel l'unité de commande et d'exploitation (40) est en outre conçue pour attribuer une valeur de correction (k($\Delta$)) à une différence ($\Delta$) de points temporels de réception (t21, t22) qui sont mesurés pour deux énergies d'impulsion différentes,

corriger l'un des points temporels de réception (t21, t22), en particulier le point temporel de réception (t21) qui est obtenu pour l'impulsion lumineuse (221) avec une énergie d'impulsion plus élevée, en ce que la valeur de correction (k($\Delta$)) est soustraite de ce point temporel de réception (t21, t22), et pour des différences ($\Delta$) différentes des points temporels de réception (t21, t22) mesurés pour les deux énergies d'impulsion différentes, obtenir les valeurs de correction (k($\Delta$)) par des mesures d'étalonnage.

**10.** Capteur optoélectronique selon la revendication 9,
**caractérisé en ce que**
l'unité de commande et d'exploitation (40) est conçue pour réaliser le procédé selon l'une des revendications 1 à 8 auprès du capteur optoélectronique.

Fig. 1

Fig. 2

Fig. 3

$\Delta = t22 - t21$

Fig. 4

Fig. 5

Reflektivität des Targets

äquivalente Entfernung [0,1 mm]

128500
128000
127500
127000
126500
126000
125500
125000
124500
124000
123500

Δ [0,1 mm]

0 200 400 600 800 1000 1200 1400 1600 1800 2000

72

71

R(Δ)

73

70

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0782007 A2
- WO 2009156580 A1
- WO 2010051615 A1
- JP H08105971 A

**In der Beschreibung aufgeführte Nicht-Patentliteratur**

- **G. ZHOU et al.** IMPROVEMENT ON TIMING ACCU-RACY OF LIDAR FOR REMOTE SENSING. *ISPRS - INTERNATIONAL ARCHIVES OF THE PHOTOGRAMMETRY, REMOTE SENSING AND SPATIAL INFORMATION SCIENCES, Bd. XLII-3,* 02. Mai 2018, 2495-2498